# FASCICULE DE BREVET EUROPEEN

(11) **EP 0 482 975 B1**
(45) Date de publication et mention de la délivrance du brevet: **22.12.1993**
(21) Numéro de dépôt: 91402637.2
(22) Date de dépôt: 03.10.1991
(51) Int. Cl.: G06K 19/06, G07F 7/10

(54) **Procédé et dispositif pour accroître la protection d'une carte à mémoire**
Verfahren und Vorrichtung zum Erhöhen des Schutzes einer Speicherkarte
Method and apparatus to enhance the protection of a memory card

(30) Priorité: 09.10.1990 FR 9012440
(43) Date de publication de la demande: 29.04.1992
(73) Titulaire: GEMPLUS CARD INTERNATIONAL, F-13420 Gémenos (FR)
(72) Inventeur: Lisimaque, Gilles, Cabinet Ballot-Schmit, F-75116 Paris (FR); Geronimi, François, F-75116 Paris (FR)
(74) Mandataire: Schmit, Christian Norbert Marie

(56) Documents cités:
- EP-A- 0 243 873
- EP-A- 0 314 148
- WO-A-88/02899

## Description

La présente invention concerne un procédé et un dispositif pour accroître la protection d'une carte à mémoire.

Elle s'applique notamment à la réalisation de cartes à microcircuits dites à puces utilisables principalement dans les domaines où l'accès à des informations ou à des services est sévèrement contrôlé.

Il s'agit notamment des cartes de crédit des domaines bancaires, des badges électroniques pour télévision à péage, de la distribution d'essence ou de fuel, des cartes électroniques pour l'accès au réseau téléphonique ou encore des cartes électroniques pour l'accès à certaines banques de données.

Dans sa définition la plus générale, une carte à mémoire comporte un dispositif de mémorisation et un organe de traitement formé par un microprocesseur ou tout dispositif équivalent, couplés l'un à l'autre par un bus de données et/ou d'adresses qui assurent également la liaison du microcircuit ainsi formé avec des dispositifs d'écriture et de lecture extérieurs à la carte. Le dispositif de mémorisation comporte généralement une mémoire non volatile, de type ROM ou EPROM, dans laquelle sont enregistrés des microprogrammes nécessaires au fonctionnement de l'organe de traitement et éventuellement une mémoire vive volatile de type RAM pour la mémorisation des données et des instructions spécifiques de l'application réservée à la carte à mémoire. Dans la mémoire non volatile sont également rangés, d'une part, le code secret identifiant le titulaire de la carte avec éventuellement un programme de chiffrement pour l'obtention d'une signature calculée sur la base du code secret et d'autre part, des instructions du programme d'utilisation lui même. Cette signature est elle même chargée dans la mémoire volatile. Comme la carte comporte d'une part le programme d'application et d'autre part un algorithme de chiffrement identique à celui avec lequel a été élaborée la signature, il suffit à chaque utilisation de vérifier que le calcul à nouveau de la signature, sur la base des instructions du programme et du code secret, est bien égal à la signature déjà enregistrée.

Bien que de par leur nature les cartes à mémoire ainsi réalisées soient difficilement utilisables par un fraudeur, l'utilisateur n'est généralement autorisé à effectuer qu'un nombre limité d'essais de son code secret pour accéder avec sa carte aux services ou aux informations qu'il recherche. Passé ce nombre d'essais, la carte est généralement confisquée. Ce dispositif de sécurité qui a pour effet de protéger les titulaires de cartes et les créditeurs de services contre des débiteurs mal intentionnés s'avère inefficace lorsque ces mêmes débiteurs possèdent des moyens électroniques perfectionnés qui leur permettent de découvrir les codes secrets enfermés dans les cartes ainsi que leurs différentes fonctionnalités, car il est en effet possible, en scrutant les réponses que donne l'unité de traitement de la carte à différentes sollicitations extérieures, de découvrir non seulement le code secret qui est renfermé dans les cartes mais également les fonctionnalités du programme d'application lui même qui est rangé dans la carte. En effet, après chaque tabulation d'un code secret, l'autorisation d'accéder au service demandé par un détenteur de carte est généralement fournie après réception d'un message de fin de commande fourni par la carte à l'issue d'une procédure de ratification, dans un délai prédéterminé suivant chaque essai, mais avec une durée qui est variable suivant que l'essai est fructueux ou non et ainsi ce fonctionnement laisse une possibilité aux fraudeurs munis de moyens sophistiqués de retrouver les codes secrets en essayant par exemple tous les codes possibles de façon systématique, en relevant à chaque présentation le temps que met la carte pour émettre le message de fin de commande. Actuellement la durée pour obtenir une présentation correcte du code secret est d'environ 200 ms et est d'environ 180 ms lorsqu'elle n'est pas correcte. Naturellement, une solution à ce problème peut être trouvée en égalant par exemple à 200 ms dans les deux cas le temps d'apparition du message de fin de commande mais celle-ci n'est pas souhaitable au plan des réalisations car elle impose l'écriture dans les mémoires de programme de codes qui consomment davantage d'espace mémoire. Et surtout elle serait quasiment impossible à réaliser en pratique car les durées des phases de programme jusqu'à la fin de commande sont très diverses parce que les étapes de programme comportent plus ou moins d'instructions selon les cas.

On pourra d'ailleurs se reporter à l'état de la technique que constitue le document EP-A-0 314 148. En effet, dans ce document on émet un signal de fin de commande à un instant différé d'une durée constante par rapport à l'instant de réception du signal de données.

Les remarques précédentes valent également pour d'autres fonctionnalités du programme d'application qui est rangé dans la carte chaque fois que l'exécution d'une de celles-ci impose le retour d'un accusé de réception sous la forme d'un signal de fin de commande. Dans ce cas, un contrefacteur pourrait encore n'avoir aucune difficulté connaissant les délais de réponse spécifique d'une carte à des signaux de commande relatifs à une application, de reconstruire le programme d'application correspondant.

Le but de l'invention est de pallier les inconvénients précités.

A cet effet, l'invention a pour objet, un procédé pour accroître la protection d'une carte à mémoire à microcircuit comportant au moins une mémoire couplée à un organe de traitement de données, l'organe de traitement étant commandé par un signal de données extérieur à la carte et émettant, en réponse à ce signal de données, un signal de fin de commande à un instant différé d'une certaine durée par rapport à la réception du signal de données qui a provoqué son émission, caractérisé en ce que cette durée est variable de façon aléatoire dans le temps.

L'invention a également pour objet une carte, définie à la revendication 4 ou la revendication 7, pour la mise en oeuvre du procédé précité.

D'autres caractéristiques et avantages de l'invention apparaîtront ci-après à l'aide de la description qui suit, faite en regard des dessins annexés qui représentent :

Figure 1 : un premier mode d'exécution du procédé selon l'invention sous la forme d'un organigramme.

Figure 2 : un diagramme des temps illustrant le procédé de la figure 1.

Figure 3 : un deuxième mode d'exécution du procédé selon l'invention.

Figure 4 : un premier mode de réalisation d'un circuit pour la mise en oeuvre du procédé selon l'invention.

Figure 5 : une mise en oeuvre logicielle du procédé selon l'invention.

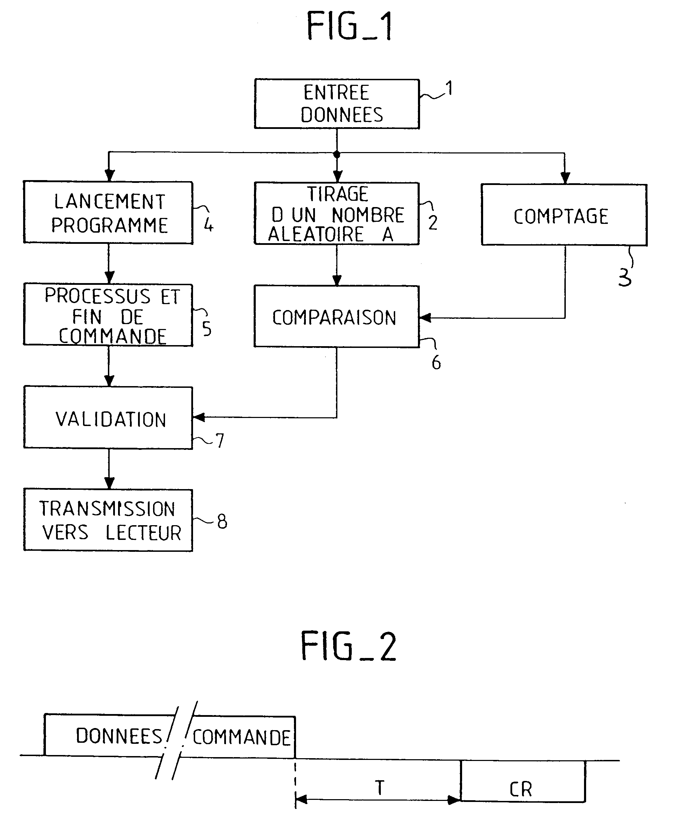

Le procédé selon l'invention dont les étapes 1 à 8 sont représentées schématiquement à la figure 1, consiste lorsque, à l'étape 1 des données ou des commandes sont reçues par le microcircuit de la carte à mémoire, à effectuer respectivement aux étapes 2 et 3 un tirage d'un nombre aléatoire A et un comptage d'impulsions fournies de façon connue par une horloge fixe non représentée. Simultanément, un programme correspondant aux données et/ou à la commande correspondante est lancé à l'étape 4 pour effectuer des opérations d'écriture, de lecture de mémoire de la carte et/ou par exemple le calcul de signature. En fin d'exécution de ces instructions, le programme émet un signal de fin de commande ou d'accusé de réception à l'étape 5. A l'étape 6 une comparaison a lieu entre le nombre aléatoire tiré à l'étape 2 et le compte de l'étape 3. Lorsque le nombre indiqué par le compte de l'étape 3 égale le nombre aléatoire obtenu à l'étape 6, le signal de fin de commande émis à l'étape 5 est validé à l'étape 7 et est transmis à l'étape 8 à l'extérieur de la carte dans un dispositif de lecture-écriture de la carte non représenté. De la sorte, et comme le montre le diagramme de la figure 2, chaque fois qu'une donnée ou commande est transmise à la carte, celle-ci peut émettre un signal de fin de commande ou d'accusé de réception CR des données et commandes qu'elle reçoit après un laps de temps T dont la durée, toujours aléatoire, ne peut jamais renseigner sur le type particulier de fonction que la carte a été amenée à exécuter.

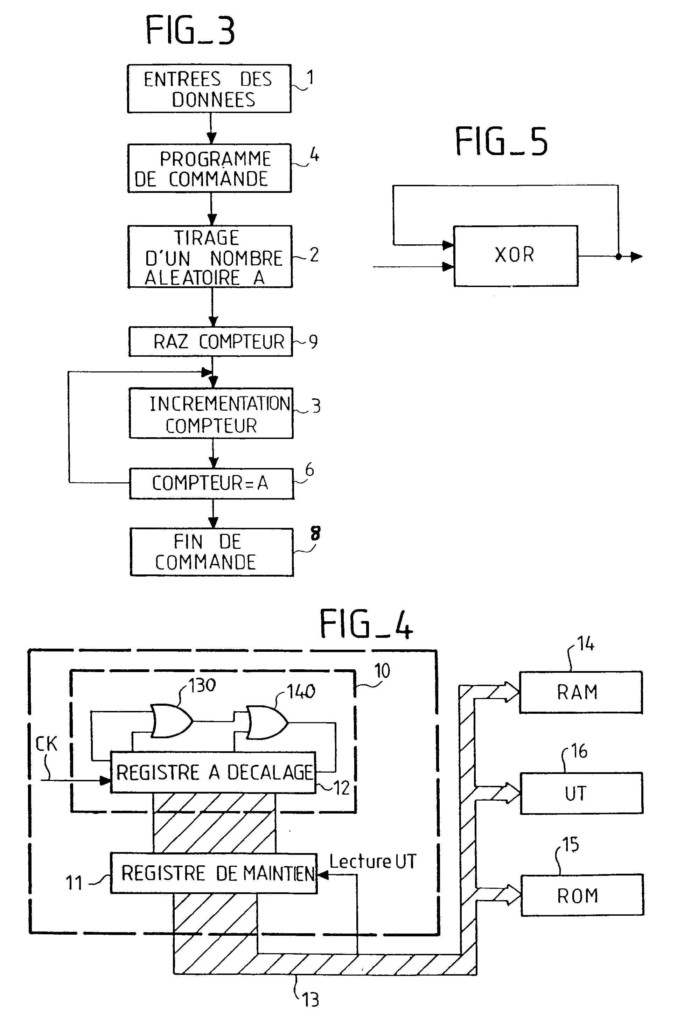

Naturellement le mode d'exécution du procédé qui vient d'être décrit n'est pas unique et d'autres variantes sont possibles en modifiant par exemple l'ordre ou le contenu des étapes 1 à 8, comme le montre la figure 3 où les éléments homologues à ceux de la figure 1 sont représentés avec les mêmes références. Sur la figure 3, en effet le tirage du nombre aléatoire A a lieu à l'étape 2 non pas comme sur la figure 1 dès la fin d'exécution de l'étape 1 d'entrée des données mais en cours ou en fin d'exécution du programme de commande à l'étape 4. D'autre part, l'initialisation du comptage de l'étape 3 a lieu non pas dès la fin d'exécution de l'étape 1 mais lorsque le nombre aléatoire A a été tiré à l'étape 2. Comme sur la figure 1 l'incrémentation du compte à l'étape 3 a lieu tant que le comptage à l'étape 6 n'a pas atteint la valeur du nombre aléatoire A.

Un mode de réalisation d'un circuit pour la mise en oeuvre du procédé précité et son interconnexion avec les éléments composant une carte à mémoire sont représentés à la figure 4. Le circuit comporte un générateur de code aléatoire représenté à l'intérieur d'une ligne fermée en pointillés 10. Les sorties parallèles du générateur 10 sont reliées aux entrées parallèles d'un registre de maintien 11. Dans l'exemple de la figure 4, le générateur de code aléatoire 10 comporte de façon connue, un registre à décalage 12 rebouclé sorties sur entrées au travers de circuits OU exclusifs 130, 140.

La connexion du circuit aux autres éléments qui composent classiquement une carte à mémoire a lieu par l'intermédiaire du bus de données 13 de ces cartes qui relient entre elles des mémoires vives 14 type RAM et des mémoires mortes 15 type ROM ou EPROM à leur unité de traitement 16. La connexion au bus de données 13 a lieu par les sorties du registre de maintien 11.

Pour l'exécution du procédé selon l'invention le registre à décalage 12 est commandé de préférence au rythme d'un signal d'horloge CK différent du signal d'horloge utilisé pour déterminer les cycles de traitement de l'unité de traitement 16. Lorsque l'unité de traitement 16 exécute, comme montré à la figure 3, le programme de commande 4 pour tirer le nombre aléatoire A, un signal de lecture UT de l'unité de traitement est appliqué sur une entrée de commande du registre de maintien 11 pour maintenir en mémoire dans le registre 11 le nombre aléatoire A tiré et assurer son transfert sur le bus 13. Il est à noter que suivant cette solution le signal d'horloge CK peut-être rendu variable en fonction notamment de la température, et des tensions d'alimentation de la carte de façon à présenter également un caractère aléatoire.

Naturellement, le mode de réalisation qui vient d'être donné du circuit 9 n'est pas unique. Un mode de réalisation purement logiciel pourra éventuellement lui être préféré mettant en oeuvre une fonction "ou exclusif" logicielle XOR comme schématisé sur la figure 5, par une porte ou exclusif équivalente dont la sortie est rebouclée sur une première entrée et dont la deuxième entrée reçoit respectivement par exemple la valeur des données transmises à la carte, tout ou partie des données et instructions contenues dans la mémoire RAM 14 et le contenu de tout ou partie de la mémoire ROM 15.

Il est à noter que dans les cas d'utilisations de mémoires de données non volatiles type EPROM les mécanismes pour la génération d'intervalles de temps aléatoires décrits précédemment devront être mis en oeuvre avant toute opération d'écriture ou d'effacement de ces mémoires car les écritures de celles-ci peuvent faire varier la tension et/ou l'intensité du courant d'alimentation, de façon suffisamment significative pour servir de repères à des mesures de temps.

## Revendications

1. Procédé pour accroître la protection d'une carte à mémoire à microcircuit comportant au moins une mémoire (13, 14) couplée à un organe de traitement de données (15), l'organe de traitement (16) étant commandé par un signal de données extérieur à la carte et émettant, en réponse à ce signal de données, un signal de fin de commande à un instant différé d'une certaine durée (T) par rapport à la réception du signal de données qui a provoqué son émission, caractérisé en ce que cette durée (T) est variable de façon aléatoire dans le temps.

2. Procédé selon la revendication 1, caractérisé en ce qu'il consiste lorsque le signal de données est appliqué à l'organe de traitement
- à tirer (2) une valeur de temps aléatoire
- à déclencher (3) un compteur de temps, et
- à provoquer (8) l'émission du signal de fin de commande lorsque le temps compté par le compteur de temps est égal (6) à la valeur de temps aléatoire tirée.

3. Procédé selon la revendication 2, caractérisé en ce que la valeur de temps aléatoire est fournie par un générateur de code aléatoire (10).

4. Carte à mémoire à microcircuit comportant au moins une mémoire (14, 15) couplée à un organe de traitement (16) de données et des moyens pour faire émettre par l'organe de traitement, lorsque celui-ci est commandé par un signal de données extérieur à la carte, un signal de fin de commande à un instant différé d'une certaine durée (T) par rapport à la réception par l'organe de traitement du signal de données qui a provoqué son émission, cette durée étant déterminée par comptage d'un certain nombre d'impulsions d'horloge, caractérisée en ce qu'elle comporte en outre un générateur de code aléatoire (10) couplé à l'organe de traitement pour fournir un nombre aléatoire (A) représentant ledit nombre d'impulsions.

5. Carte selon la revendication 4, caractérisé en ce que le générateur de code aléatoire (10) est couplé à l'unité de traitement (16) par l'intermédiaire d'un registre de maintien (11) et d'un bus de données (13).

6. Carte selon la revendication 5, caractérisé en ce que le générateur de code aléatoire (10) comporte un registre à décalage (12) couplé sorties sur entrées par des circuits "ou exclusifs" (130, 140) et est commandé par un signal d'horloge (CK) différent du signal d'horloge interne à l'unité de traitement (16).

7. Carte à mémoire à microcircuit comportant au moins une mémoire (14, 15) couplée à un organe de traitement (16) de données et des moyens pour faire émettre par l'organe de traitement, lorsque celui-ci est commandé par un signal de données extérieur à la carte, un signal de fin de commande à un instant différé d'une certaine durée (T) par rapport à la réception par l'organe de traitement du signal de données qui a provoqué son émission, cette durée étant déterminée par comptage d'un certain nombre d'impulsions d'horloge, caractérisée en ce que l'organe de traitement est convenablement programmé pour tirer un nombre aléatoire (A) et provoquer l'émission du signal de fin de commande après une durée dépendant de la valeur du nombre aléatoire (A) tiré.

## Claims

1. A method to increase the protection of a microcircuit-based memory card comprising at least one memory (13, 14) coupled to a data-processing element (15) wherein, said data-processing element receiving a command by a data signal external to the card and emitting in response to this data signal an end-of-command signal at a moment that is deferred by a certain duration (T) in respect of the reception of the data signal, characterised by the fact that the said during (T) is randomly variable in time.

2. A method according to claim 1 wherein, when the data signal is applied to the data-processing element, said method consists in:
- drawing (2) a random time value,
- triggering (3) a time counter, and
- causing the emission of the end-of-command signal when the time counted by the time counter is equal (6) to the random time value drawn.

3. A method according to claim 2, wherein the random time value is provided by a random code generator (10).

4. Microcircuit based memory card comprising at least one memory (14, 15) coupled to a data-processing element (16) and means for causing the processing element, when it receives a command from a data signal external to the card, to emit an end-of-command signal at a moment deferred by a certain duration (T) in respect of the reception, by the processing element, of the data signal which caused its emission, the said duration being determined by the counting of a certain number of clock pulses, characterised by the fact that it also comprises a random code generator (10) coupled to the processing element in order to supply a random number (A) representing the said number of pulses.

5. A card according to claim 4, wherein the random code generator (10) is coupled to the processing unit (16) by means of a buffer register (11) and a data bus (13).

6. A card according to claim 5, wherein the random code generator (10) has a shift register (12) with outputs coupled to inputs by means of exclusive-OR circuits (130, 140), and is controlled by a clock signal (CK) that is different from the clock signal internal to the processing unit (16).

7. Microcircuit-based memory card comprising at least one memory (14, 15) coupled to a data processing element (16) and means for causing the processing element, when the latter is controlled by a data signal external to the card, to emit an end-of-command signal at a moment which is deferred by a certain duration (T) in respect of the reception, by the processing element, of the data signal which caused its emission, this duration being determined by the counting of a certain number of clock pulses, characterised by the fact that the processing element is suitably programmed to draw a random number (A) and cause the emission of the end-of-command signal after a duration depending on the value of the random number (A) drawn.

## Patentansprüche

1. Verfahren zum Erhöhen des Schutzes einer eine Mikroschaltung enthaltenden Speicherkarte mit wenigstens einem Speicher (14, 15), der an ein Datenverarbeitungsorgan (16) angeschlossen ist, wobei das Datenverarbeitungsorgan (16) von einem Datensignal von außerhalb der Karte gesteuert wird und als Antwort auf dieses Datensignal an einem Zeitpunkt ein Befehlsendesignal abgibt, der um eine gewisse Dauer (T) bezüglich des Empfanges des Datensignals verzögert ist, das seine Aussendung ausgelöst hat, dadurch gekennzeichnet, daß diese Dauer (T) auf Zufallsbasis zeitlich variabel ist.

2. Verfahren nach Anspruch 1, dadurch gekennzeichnet, daß es beim Anlegen des Datensignals an das Verarbeitungsorgan darin besteht, daß
- ein Zufalls-Zeitwert gezogen wird (2)
- ein Zeitzahler ausgelöst wird (3) und
- das Aussenden des Befehlsendesignals hervorgerufen wird (8), wenn die von dem Zeitzähler gezählte Zeit gleich dem gezogenen Zufalls-Zeitwert ist (6).

3. Verfahren nach Anspruch 2, dadurch gekennzeichnet, daß der Zufalls-Zeitwert von einem Zufallscodegenerator (10) geliefert wird.

4. Speicherkarte mit Mikroschaltung mit wenigstens einem Speicher (14, 15), der mit einem Datenverarbeitungsorgan (16) und mit Mitteln gekoppelt ist, die das Datenverarbeitungsorgan veranlassen, dann, wenn dieses von einem Datensignal von außerhalb der Karte gesteuert wird, ein Befehlsendesignal an einem Zeitpunkt auszusenden, der gegenüber dem Empfang des Datensignals, das seine Aussendung hervorgerufen hat, um eine gewisse Dauer (T) verzögert ist, wobei diese Dauer durch Zählen einer gewissen Anzahl von Taktimpulsen bestimmt wird, dadurch gekennzeichnet, daß sie ferner eine Zufallscodegenerator (10) enthält, der an das Verarbeitungsorgan angeschlossen ist, um eine die Anzahl von Impulsen repräsentierende Zufallszahl (A) zu liefern.

5. Karte nach Anspruch 4, dadurch gekennzeichnet, daß der Zufallscodegenerator (10) an die Verarbeitungseinheit (16) über ein Aufrechterhaltungsregister und einen Datenbus (13) angeschlossen ist.

6. Karte nach Anspruch 5, dadurch gekennzeichnet, daß der Zufallscodegenerator (10) ein Schieberegister (12) enthält, dessen Ausgänge über Antivalenzschaltungen (130, 140) mit seinen Eingängen verbunden sind und das von einem Taktsignal (CK) gesteuert ist, das von dem internen Taktsignal der Verarbeitungseinheit (16) verschieden ist.

7. Speicherkarte mit Mikroschaltung mit wenigstens einem Speicher (14, 15), der mit einem Datenarbeitungsorgan (16) und mit Mitteln gekoppelt ist, die das Datenverarbeitungsorgan veranlassen, dann, wenn dieses von einem Datensignal von außerhalb der Karte gesteuert wird, ein Befehlsendesignal an einem Zeitpunkt auszusenden, der gegenüber dem Empfang des Datensignals, das seine Aussendung hervorgerufen hat, um eine gewisse Dauer (T) verzögert ist, wobei diese Dauer durch Zählen einer gewissen Anzahl von Taktimpulsen bestimmt wird, dadurch gekennzeichnet, daß das Verarbeitungsorgan in geeigneter Weise zum Ziehen einer Zufallszahl (A) programmiert ist und das Aussenden des Befehlsendesignals nach einer Dauer hervorruft, die vom Wert der gezogenen Zufallszahl (A) abhängt.
